# FASCICULE DE BREVET EUROPEEN

(11) **EP 1 880 885 B1**
(45) Date de publication et mention de la délivrance du brevet: **09.09.2009**
(21) Numéro de dépôt: 07112652.8
(22) Date de dépôt: 17.07.2007
(51) Int. Cl.: B60J 1/20, B60J 7/00

(54) **Dispositif d'occultation pour véhicule automobile à moyens de blocage, et véhicule automobile correspondant**
Abdeckungsvorrichtung mit Verriegelungsmitteln für ein Kraftfahrzeug
Sun shade with locking means for an automobile

(30) Priorité: 18.07.2006 FR 0606520
(43) Date de publication de la demande: 23.01.2008
(73) Titulaire: Wagon SAS, 79302 Bressuire Cédex (FR)
(72) Inventeur: Jincheleau, Michel, 79320 Moncoutant (FR); Devanne, Christophe, 79300 Chambroutet (FR)
(74) Mandataire: Guéné, Patrick

(56) Documents cités:
- EP-A- 1 609 648
- EP-A- 1 666 289
- EP-A1- 1 211 111
- DE-A1- 3 428 700
- US-A- 5 404 926

## Description

### 1. domaine de l'invention

Le domaine de l'invention est celui de l'équipement pour véhicule automobile. Plus précisément, l'invention concerne les systèmes d'occultation d'une surface dans un véhicule, et par exemple d'un pavillon vitré.

Plus précisément encore, l'invention concerne les dispositifs d'occultation guidés par des rails latéraux qui ne sont pas parallèles.

### 2. art antérieur

Il existe de nombreuses surfaces qu'il peut être souhaitable de pouvoir occulter, dans un véhicule automobile. Il peut notamment s'agir d'un pavillon vitré, d'un coffre, d'un pare-brise, d'une vitre arrière...

On commente par la suite le cas d'un pavillon vitré (qui peut être prolongé par le pare-brise et/ou la vitre arrière, dans certains véhicules), mais il est aisé de généraliser à d'autres situations.

Les pavillons vitrés sont de plus en plus courants. Il est bien sûr nécessaire de prévoir des moyens d'occultation amovibles, notamment pour protéger les occupants du véhicule des effets du soleil. Ces moyens d'occultation peuvent être par exemple des stores à enrouleur, ou des velums (plaques rigides ou semi-rigides). Dans les deux cas, ils sont généralement guidés par des rails de guidage montés sur les bords latéraux du pavillon, ou au voisinage de ceux-ci.

On connaît également des stores d'occultation à opacité réglable, tel que le store à double rouleau d'occultation permetttant de faire varier son opacité, décrit dans le document EP 1 211 111.

Souvent, les pavillons vitrés ne sont pas rectangulaires, mais plutôt trapézoïdaux, ou plus généralement de largeur variable. Dans ce cas, les rails de guidage ne sont pas parallèles, ce qui rend le guidage mal aisé. Il est en effet nécessaire que la traverse permettant le guidage des moyens d'occultation soit de longueur variable.

Pour assurer cette fonction de longueur variable, on peut prévoir que la traverse est formée d'éléments coulissant les uns par rapport aux autres.

### 3. inconvénients de l'art antérieur

Un des problèmes que l'on rencontre dans les dispositifs connus est la possibilité de les placer dans une ou plusieurs positions intermédiaires. En effet, l'utilisateur souhaite souvent placer le dispositif dans une position spécifique, correspondant à ses besoins ou à ses souhaits, sans systématiquement le déployer intégralement.

Dans certains cas, on définit une ou plusieurs positions indexées, par exemple par l'intermédiaire d'encoches ou de pênes dans les rails. On connaît ainsi un store pour vitre arrière, décrit dans le document EP 1 666 289, équipé de telles encoches dans les rails de guidage d'une traverse coulissante prévue pour déployer ou replier la toile, permettant de bloquer la traverse dans des positions déterminées. Mais cette solution n'est pas optimale, puisque le nombre de positions possibles est limité.

On préfère donc des systèmes continus, permettant à l'utilisateur de choisir précisément la position qu'il souhaite. On a ainsi proposé d'équiper les extrémités des traverses de moyens de verrouillage coopérant avec les rails. Mais cette solution n'est bien adaptée que pour des rails parallèles. Dans le cas contraire, les mécanismes nécessaires seraient complexes et coûteux, et difficiles à mettre en oeuvre efficacement.

### 4. objectifs de l'invention

L'invention a notamment pour objectif de pallier ces inconvénients de l'art antérieur.

Plus précisément, un objectif de l'invention est de fournir une technique d'occultation pour véhicule automobile, et par exemple pour pavillon vitré, qui permette un arrêt en toutes positions, de façon efficace et simple, en présence de rails non parallèles.

Un autre objectif de l'invention est, selon un aspect particulier de l'invention, de fournir une telle technique, qui supprime, ou à tout le moins limite, les vibrations et les bruits intempestifs.

L'invention a également pour objectif de fournir une telle technique, qui soit simple et peu coûteuse à mettre en oeuvre.

### 5. résumé de l'invention

Ces objectifs, ainsi que d'autres qui apparaîtront par la suite, sont atteints à l'aide d'un dispositif d'occultation pour véhicule automobile, comprenant au moins un élément d'occultation guidé le long de deux rails non parallèles, entre une position escamotée et au moins une position d'occultation.

Selon l'invention, le dispositif comprend au moins une traverse de longueur variable dont les extrémités circulent dans lesdits rails, et des moyens de blocage de ladite traverse, figeant la longueur de cette dernière. Ladite traverse porte ainsi des moyens de blocage agissant sur deux parties de ladite traverse, mobiles l'une par rapport à l'autre selon l'axe de ladite traverse, lesdits moyens de blocage pouvant prendre au moins deux positions :
- une position de blocage, solidarisant lesdites parties mobiles de la traverse, de façon à figer la longueur de cette dernière et immobiliser ladite traverse dans lesdits rails ;
- au moins une position de libération, dans laquelle lesdites parties mobiles sont désolidarisées, de façon à permettre une variation de la longueur de ladite traverse et un déplacement de cette dernière dans lesdits rails.

Ladite barre de tirage porte une poignée de commande coopérant avec lesdits moyens de blocage, dont la position par défaut correspond à ladite position de blocage.

En d'autres termes, selon l'invention, on bloque, ou immobilise, le dispositif d'occultation en toute position, en bloquant la longueur de la traverse. Celle-ci est alors immobilisée dans les rails, puisqu'ils ne sont pas parallèles.

Ladite traverse est formée préférentiellement d'une partie centrale et de deux parties d'extrémité portant chacune une extrémité circulant dans un desdits rails et montées coulissantes par rapport à ladite partie centrale, et en ce que lesdits moyens de blocage agissent sur lesdites parties d'extrémité.

De façon avantageuse, lesdits moyens de blocage peuvent prendre au moins une position de blocage, figeant la longueur de ladite traverse, et au moins une position de libération, dans laquelle le déplacement de ladite traverse le long desdits rails est possible.

Avantageusement, ladite poignée de commande coopère avec des moyens de rappel, tendant à ramener lesdits moyens de blocage dans ladite position de blocage.

On dispose ainsi d'un système particulièrement simple à utiliser et ergonomique.

Ladite poignée peut notamment être mobile dans deux directions, permettant de définir deux positions de libération.

Selon un mode de réalisation particulier, ladite poignée est montée mobile en rotation, et entraîne deux doigts de manoeuvre, actifs respectivement dans l'une ou l'autre desdites positions de libération, et agissant sur une came mobile en rotation.

Il est ainsi aisé de déplacer les moyens d'occultation dans les deux sens, d'une seule main et de façon ergonomique.

De façon avantageuse, lesdits moyens de blocage comprennent un élément fixe solidaire de ladite traverse et au moins un élément mobile, venant en contact avec ledit élément fixe.

Ledit élément fixe peut notamment être une poulie, et ledit élément mobile une came, prévue pour s'inscrire dans le réa de ladite poulie.

Avantageusement, ladite poulie est en élastomère.

Selon un aspect secondaire, le dispositif de l'invention peut comprendre des moyens d'équilibrage solidarisant lesdites parties d'extrémité, de façon qu'elles se déplacent sensiblement symétriquement par rapport à ladite partie centrale.

Dans ce cas, lesdits moyens d'équilibrage peuvent comprendre des éléments d'engrenage comprenant deux crémaillères formées respectivement sur chacune desdites parties d'extrémité, coopérant avec une roue dentée solidaire dudit élément d'occultation, et lesdits moyens de blocage agissent sur ladite roue dentée.

De façon préférentielle, ladite poulie est alors montée sur l'axe de ladite roue dentée.

Selon un mode de réalisation avantageux, ledit élément d'occultation comprend un velum.

Avantageusement, ledit velum coopère avec au moins un volet latéral mobile, venant occulter une surface s'étendant entre un desdits rails et un bord dudit velum.

Dans un mode de réalisation particulier, lesdits rails sont galbés dans deux directions.

Dans ce cas, préférentiellement, lesdites parties d'extrémité portent chacune une rotule apte à suivre les galbes desdits rails.

Le dispositif de l'invention peut notamment assure l'occultation d'au moins une portion d'au moins une des surfaces appartenant au groupe comprenant :
- les pavillons vitrés ;
- les pare-brise ;
- les vitres arrière ;
- les vitres latérales ;
- les toits ouvrants ;
- les coffres à bagages.

L'invention concerne également un véhicule automobile comprenant au moins un dispositif d'occultation tel que décrit ci-dessus.

### 6. liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre un mode de réalisation d'un dispositif d'occultation selon l'invention, mettant en oeuvre un velum d'occultation pour pavillon vitré ;
- les figures 2A et 2B présentent le dispositif d'occultation de la figure 1, respectivement en position fermée (déployée) et en position ouverte (repliée) ;
- la figure 3 est une vue de détail d'une extrémité de la traverse du dispositif de la figure 1 ;
- la figure 4 est une vue de détail des moyens d'équilibrage du dispositif de la figure 1 ;
- la figure 5 est une vue de détail des moyens de blocage du dispositif de la figure 1 ;
- la figure 6 illustre la poignée de contrôle des moyens de blocage de la figure 5.

### 7. description d'un mode de réalisation de l'invention

L'invention repose donc sur une approche particulière de l'arrêt en toute position d'un dispositif d'occultation associé à des rails non parallèles. Elle est basée directement sur l'exploitation du caractère non parallèle des rails : en bloquant la longueur de la traverse d'entraînement du dispositif, on bloque sa position dans les rails (à l'emplacement où la distance entre les rails est égale à la longueur fixée de la traverse).

Il suffit de débloquer la traverse pour que sa longueur puisse varier, et donc qu'elle puisse être déplacée le long des rails.

On décrit par la suite le cas d'un dispositif d'occultation d'un pavillon vitré et de pare-brise, équipé d'un velum. On comprend cependant que la même approche peut être mise en oeuvre pour d'autres dispositifs d'occultation, pour vitre arrière, vitre latérale, cache-bagages...

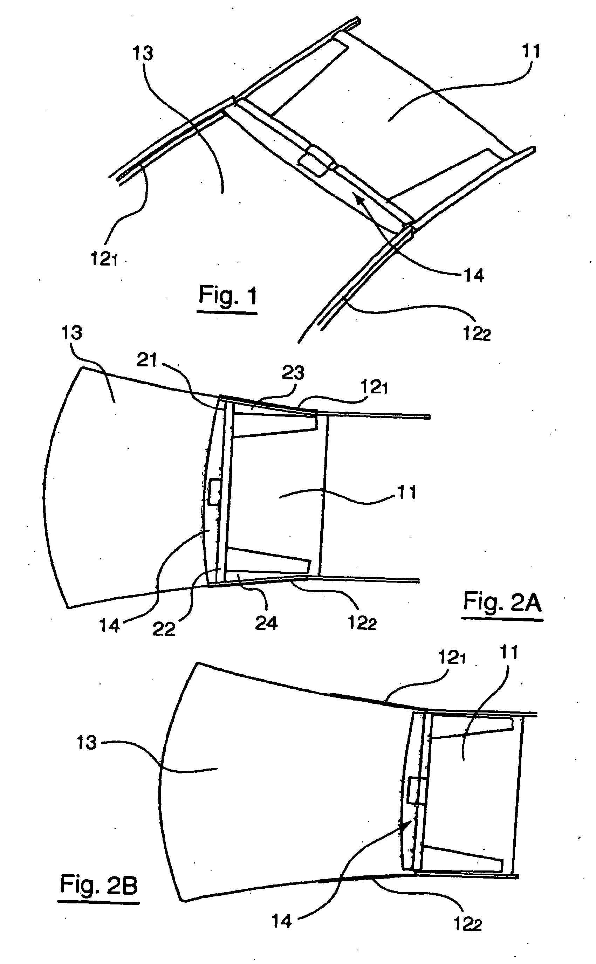

La figure 1 présente un tel dispositif. Il comprend un velum 11, guidée le long de deux rails non parallèles 12₁ et 12₂, s'étendant le long de la partie supérieure du pare-brise 13. Le velum 11 porte une traverse 14, au voisinage de son extrémité libre. C'est cette traverse 14 qui est guidée dans les rails 12₁ et 12₂, et qui entraîne donc le velum. Elle assure également la fonction de système équilibreur.

Comme on le voit plus précisément sur les figures 2A et 2B, le dispositif peut passer d'une position ouverte, ou repliée, (figure 2B) à une position fermée, ou déployée (figure 2A). On constate que, dans cette dernière position, la traverse 14 s'est allongée, par l'intermédiaire des éléments d'extrémité 21 et 22.

On peut également noter, dans ce mode de réalisation, la présence de deux volets latéraux 23 et 24, montés mobiles en rotation sur le velum 11, et qui se déploient en position fermée, pour occulter les zones latérales du pare-brise, non couvertes par le velum 11. Le déploiement peut se faire sous l'effet de moyens de rappel, et/ou par l'intermédiaire d'une pièce d'entraînement solidaire du rail.

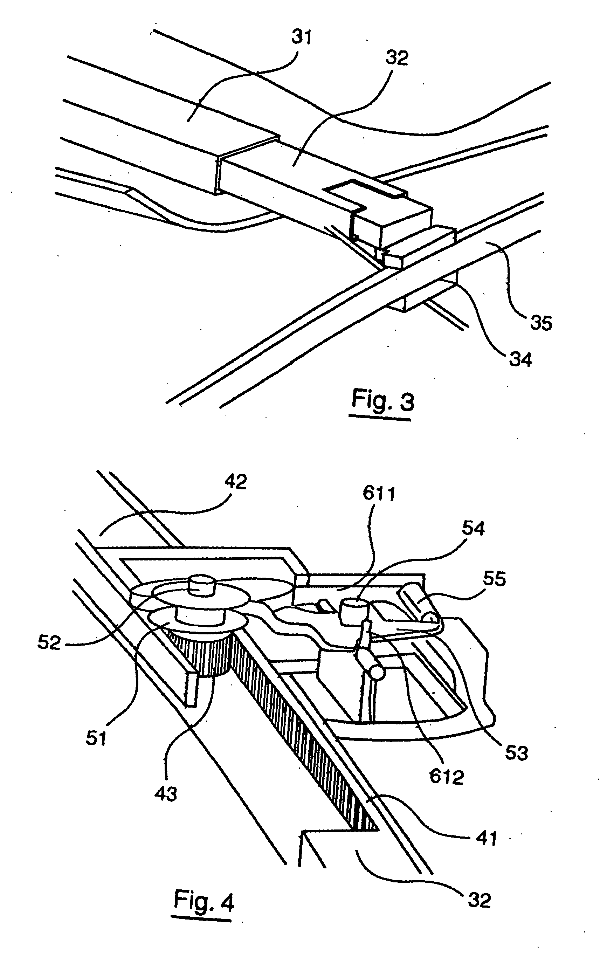

La figure 3 présente schématiquement une extrémité de la traverse 14. Celle-ci comprend un élément de traverse femelle 31, ou élément central, solidarisé au velum 11, et un élément de traverse mâle 32, ou élément d'extrémité monté coulissant à l'intérieur de la traverse femelle 31. C'est cet élément de traverse mâle 32 qui contrôle les variations de longueur de la traverse, dues à l'absence de parallélisme entre les rails.

L'élément de traverse mâle 32 porte un patin 34, dont la forme est adaptée pour coulisser dans le rail 35. Ce patin est équipé d'une rotule, pour assurer un coulissement efficace suivant les galbes du rail 35.

La traverse comprend deux éléments de traverse mâles, de part et d'autre, montés de façon symétrique. Dans un autre mode de réalisation, l'invention peut être mise en oeuvre sur un seul couple élément femelle / élément mâle.

La figure 4 (dans laquelle l'élément de traverse femelle 31 a été escamoté, pour distinguer les moyens d'équilibrage) présente la partie centrale de la traverse, son mécanisme d'équilibrage et son mécanisme de blocage (qui peuvent être mis en oeuvre indépendamment l'un de l'autre). Comme on le voit sur cette figure, les éléments d'extrémité 32 se terminent chacun, dans la zone centrale de la traverse, par une crémaillère 41, 42.

Une roue dentée, ou pignon, 43 est montée sur le velum 11, en partie centrale, pour coopérer avec les deux crémaillères 41 et 42. Ainsi, on assure de façon simple et efficace un bon équilibrage de la traverse, avec un déplacement symétrique des deux crémaillères et donc des deux éléments d'extrémité de la traverse.

En effet, tout déplacement agit sur le pignon 43, qui contrôle l'équilibrage et la symétrie du déplacement des deux crémaillères.

Bien sûr, de nombreux autres moyens d'équilibrage, par exemple basés sur un autre type d'engrenage, peuvent être envisagés pour assurer la même fonction de liaison des deux éléments de traverse mâles pour qu'ils se déplacent de façon symétrique, et donc que le velum reste bien centré.

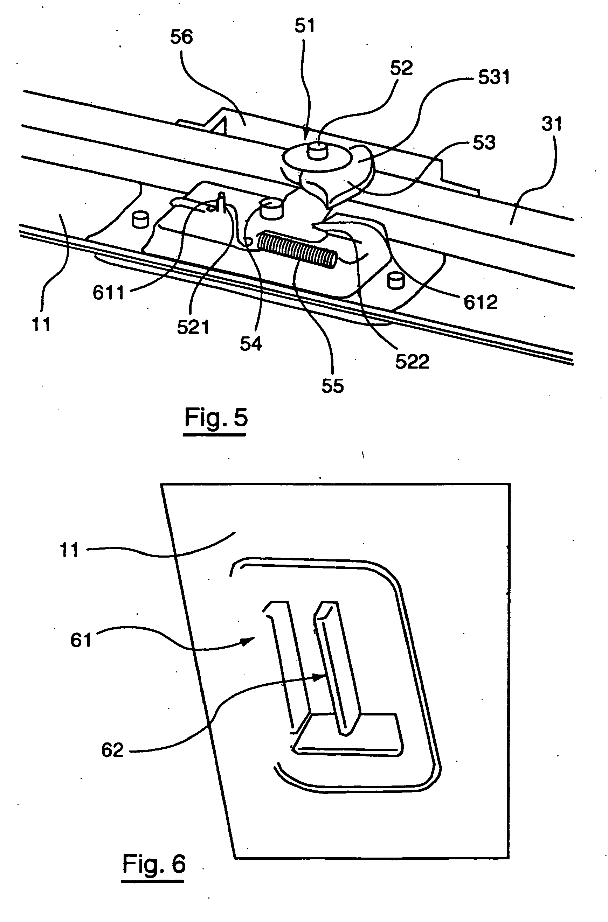

Selon l'invention, que l'on distingue également sur la figure 5, on prévoit également des moyens de blocage de la longueur de la traverse, qui assurent un blocage du déplacement du velum (puisque les rails ne sont pas parallèles). Ces moyens de blocage agissent sur les moyens d'équilibrage, en les immobilisant.

Pour cela, selon un mode réalisation illustré, l'élément de traverse femelle 31 porte une poulie 51, réalisée par exemple en élastomère, et montée sur l'axe 52 du pignon ou roue dentée 43, des moyens d'équilibrage. Un élément de blocage, ou de freinage, 53 vient s'inscrire (partie 531) dans le réa de la poulie 51.

Lorsque l'élément de freinage 53 est en contact avec la poulie 51, cette dernière est immobilisée. Elle empêche alors la rotation du pignon, et donc le déplacement des crémaillères des éléments de traverse mâles. En conséquence, la longueur de la traverse est figée, et le velum est immobilisé à la position choisie, qui peut être toute position intermédiaire de déploiement.

L'élément de freinage (ou came) 53 est mobile en rotation autour d'un axe 54, de façon à pouvoir être éloigné de la poulie 51, pour prendre une position de libération, dans laquelle la poulie n'est plus immobilisée, ce qui permet le déplacement du pignon, des crémaillères, et donc du velum.

Le passage de la position de blocage à la position de libération peut être réalisé de plusieurs façons, manuelles ou motorisées. Selon le mode de réalisation illustré par la figure 6, on a prévu sur le velum, du côté de l'habitacle du véhicule, une poignée, comprenant un logement fixe 61 et une poignée d'actionnement mobile 62.

Cette poignée 62 est mobile autour d'un axe, dans deux sens, de façon à permettre une manipulation aisée pour l'utilisateur, aussi bien pour fermer ou ouvrir le velum.

Comme cela apparaît sur les figures 4 et 5, cette poignée mobile 61 se prolonge, du côté du mécanisme, par deux doigts de manoeuvre 611 et 612 qui agissent chacune (respectivement selon le sens de basculement de la poignée 61) sur des zones d'appui 521, 522, de la came 53, pour faire passer celles-ci de la position de blocage à la position de libération.

Un ressort de rappel 55 est solidarisé à une partie fixe du velum, par exemple l'élément de poignée 61, est relié par son autre extrémité à la came 53. Ce ressort de rappel tend à ramener la came dans la position de blocage (et l'élément de poignée 62 dans sa position de repos). Ainsi, de façon automatique, le velum est immobilisé dans la position choisie par l'utilisateur, lorsque aucune action n'est apportée sur le bouton 62.

Sans action spécifique de blocage ou de verrouillage, l'utilisateur dispose donc d'un réglage précis (arrêt toutes positions) du velum. Dès que l'utilisateur agit sur la poignée, le déplacement du velum est à nouveau possible, de façon simple et précise.

Bien sûr, d'autres moyens de blocage, c'est-à-dire de solidarisation temporaire des éléments coulissants peuvent être envisagés, par exemple à partir de moyens d'engrenage mobiles (crémaillères par exemple) ou de systèmes à friction.

## Revendications

1. Dispositif d'occultation pour véhicule automobile, comprenant au moins un élément d'occultation guidé le long de deux rails (12₁ et 12₂) non parallèles, entre une position escamotée et au moins une position d'occultation,
comprenant au moins une traverse (14) de longueur variable dont les extrémités circulent dans lesdits rails (12₁ et 12₂), permettant le déplacement dudit élément d'occultation le long desdits rails,
**caractérisé en ce que** ladite traverse (14) porte des moyens de blocage agissant sur deux parties de ladite traverse, mobiles l'une par rapport à l'autre selon l'axe de ladite traverse, lesdits moyens de blocage pouvant prendre au moins deux positions :
- une position de blocage, solidarisant lesdites parties mobiles de la traverse, de façon à figer la longueur de cette dernière et immobiliser ladite traverse dans lesdits rails ;
- au moins une position de libération, dans laquelle lesdites parties mobiles sont désolidarisées, de façon à permettre une variation de la longueur de ladite traverse et un déplacement de cette dernière dans lesdits rails,
et **en ce que** ladite traverse porte une poignée de commande coopérant avec lesdits moyens de blocage, dont la position par défaut correspond à ladite position de blocage.

2. Dispositif d'occultation selon la revendication 1, **caractérisé en ce que** ladite traverse (14) est formée d'une partie centrale (31) et de deux parties d'extrémité (32) portant chacune une extrémité circulant dans un desdits rails (12₁ et 12₂) et montées coulissantes par rapport à ladite partie centrale (31), et **en ce que** lesdits moyens de blocage agissent sur lesdites parties d'extrémité (32).

3. Dispositif d'occultation selon l'une quelconque des revendications 1 et 2, **caractérisé en ce que** ladite poignée de commande (61) coopère avec des moyens de rappel, tendant à ramener lesdits moyens de blocage dans ladite position de blocage.

4. Dispositif d'occultation selon l'une quelconque des revendications 1 à 3, **caractérisé en ce que** ladite poignée (61) est mobile dans deux directions, permettant de définir deux positions de libération.

5. Dispositif d'occultation selon la revendication 4, **caractérisé en ce que** ladite poignée (61) est montée mobile en rotation, et entraîne deux doigts de manoeuvre (611 et 612), actifs respectivement dans l'une ou l'autre desdites positions de libération, et agissant sur une came (52) mobile en rotation.

6. Dispositif d'occultation selon l'une quelconque des revendications 1 à 5, **caractérisé en ce que** lesdits moyens de blocage comprennent un élément fixe solidaire de ladite traverse (14) et au moins un élément mobile, venant en contact avec ledit élément fixe.

7. Dispositif d'occultation selon la revendication 6, **caractérisé en ce que** ledit élément fixe est une poulie (51) et **en ce que** ledit élément mobile est une came (53), prévue pour s'inscrire dans le réa de ladite poulie (51).

8. Dispositif d'occultation selon la revendication 7, **caractérisé en ce que** ladite poulie (51) est en élastomère.

9. Dispositif d'occultation selon l'une quelconque des revendications 1 à 8, **caractérisé en ce qu'**il comprend des moyens d'équilibrage solidarisant lesdites parties d'extrémité (32), de façon qu'elles se déplacent sensiblement symétriquement par rapport à ladite partie centrale (31).

10. Dispositif d'occultation selon la revendication 9, **caractérisé en ce que** lesdits moyens d'équilibrage comprennent des éléments d'engrenage comprenant deux crémaillères (41 et 42) formées respectivement sur chacune desdites parties d'extrémité (32), coopérant avec une roue dentée (43) solidaire dudit élément d'occultation,
et **en ce que** lesdits moyens de blocage agissent sur ladite roue dentée (43).

11. Dispositif d'occultation selon les revendications 7 et 9, **caractérisé en ce que** ladite poulie (51) est montée sur l'axe (52) de ladite roue dentée (43).

12. Dispositif d'occultation selon l'une quelconque des revendications 1 à 11, **caractérisé en ce que** ledit élément d'occultation comprend un velum (11).

13. Dispositif d'occultation selon la revendication 12, **caractérisé en ce que** ledit velum (11) coopère avec au moins un volet latéral mobile (23 et 24), venant occulter une surface s'étendant entre un desdits rails (12₁ et 12₂) et un bord dudit velum (11).

14. Dispositif d'occultation selon l'une quelconque des revendications 1 à 13, **caractérisé en ce que** lesdits rails (12₁ et 12₂) sont galbés dans deux directions.

15. Dispositif d'occultation selon la revendication 14, **caractérisé en ce que** lesdites parties d'extrémité (32) portent chacune une rotule apte à suivre les galbes desdits rails (12₁ et 12₂).

16. Dispositif selon l'une quelconque des revendications 1 à 15, **caractérisé en ce qu'**il assure l'occultation d'au moins une portion d'au moins une des surfaces appartenant au groupe comprenant :
- les pavillons vitrés ;
- les pare-brise ;
- les vitres arrière ;
- les vitres latérales ;
- les toits ouvrants ;
- les coffres à bagages.

17. Véhicule automobile comprenant au moins un dispositif d'occultation selon l'une quelconque des revendications 1 à 16, comprenant au moins un élément d'occultation guidé le long de deux rails non parallèles, entre une position escamotée et au moins une position d'occultation, et comprenant au moins une traverse (14) de longueur variable dont les extrémités circulent dans lesdits rails (12₁ et 12₂), permettant le déplacement dudit élément d'occultation le long desdits rails,
**caractérisé en ce que** ladite traverse (14) porte des moyens de blocage agissant sur deux parties de ladite traverse, mobiles selon l'axe de ladite traverse, lesdits moyens de blocage pouvant prendre au moins deux positions :
- une position de blocage, solidarisant lesdites parties mobiles de la traverse, de façon à figer la longueur de cette dernière et immobiliser ladite traverse dans lesdits rails ;
- au moins une position de libération, dans laquelle lesdites parties mobiles sont désolidarisées, de façon à permettre une variation de la longueur de ladite traverse et un déplacement de cette dernière dans lesdits rails,
et **en ce que** ladite traverse porte une poignée de commande coopérant avec lesdits moyens de blocage, dont la position par défaut correspond à ladite position de blocage.

## Claims

1. Shading device for a motor vehicle, said device comprising at least one shading element which is guided along two non-parallel rails (12₁ and 12₂), between a retracted position and at least one shading position,
and comprising at least one crosspiece (14) of variable length whose ends run within said rails (12₁ and 12₂), making it possible to displace said shading element along said rails,
**characterised in that** said crosspiece (14) carries locking means acting on two parts of said crosspiece which are movable in relation to one another along the axis of said crosspiece, said locking means being designed to take at least two positions:
- a locking position which firmly attaches said movable parts of the crosspiece in such a way as to fix the length of the latter and stop said crosspiece within said rails;
- at least one releasing position, in which said movable parts are disengaged in such a way as to permit a variation in the length of said crosspiece and a displacement of the latter within said rails;
and **in that** said crosspiece carries a control handle which cooperates with said locking means, whose default position corresponds to said locking position.

2. Shading device according to claim 1, **characterised in that** said crosspiece (14) is made up of a central part (31) and two end parts (32) which each carry an end that runs in one of said rails (12₁ and 12₂), and are mounted so as to slide with respect to said central part (31), and **in that** said locking means act on said end parts (32).

3. Shading device according to either of claims 1 or 2, **characterised in that** said control handle (61) cooperates with return means which tend to bring the said locking means back into said locking position.

4. Shading device according to any of claims 1 to 3, **characterised in that** said handle (61) is movable in two directions, making it possible to define two releasing positions.

5. Shading device according to claim 4, **characterised in that** said handle (61) is mounted so as to be movable in rotation and drives two operating fingers (611 and 612) which are operative in one or other of said releasing positions respectively, and act on a cam (52) which is movable in rotation.

6. Shading device according to any of claims 1 to 5, **characterised in that** said locking means comprise a fixed element which is firmly attached to said crosspiece (14), and at least one movable element which comes into contact with said fixed element.

7. Shading device according to claim 6, **characterised in that** said fixed element is a pulley (51) and **in that** said movable element is a cam (53) which is intended to insert itself in the wheel of said pulley (51).

8. Shading device according to claim 7, **characterised in that** said pulley (51) is made of elastomer.

9. Shading device according to any of claims 1 to 8, **characterised in that** it comprises balancing means which firmly attaches said end parts (32) in such a way that they are displaced substantially symmetrically with respect to said central part (31).

10. Shading device according to claim 9, **characterised in that** said balancing means comprise gear elements comprising two racks (41 and 42) which are formed on each of said end parts (32) respectively and cooperate with a toothed wheel (43) which is integral with said shading element,
and **in that** said locking means act on said toothed wheel (43).

11. Shading device according to claims 7 and 9, **characterised in that** said pulley (51) is mounted on the shaft (52) of said toothed wheel (43).

12. Shading device according to any of claims 1 to 11, **characterised in that** said shading element comprises a canopy (11).

13. Shading device according to claim 12, **characterised in that** said canopy (11) cooperates with at least one movable lateral flap (23 and 24), which shades a surface extending between one of said rails (12₁ and 12₂) and an edge of said canopy (11).

14. Shading device according to any of claims 1 to 13, **characterised in that** said rails (12₁ and 12₂) are curved in two directions.

15. Shading device according to claim 14, **characterised in that** said end parts (32) each carry a ball-and-socket joint suitable for moving along the curves of said rails (12₁ and 12₂).

16. Device according to any of claims 1 to 15, **characterised in that** it shades at least one portion of at least one of the surfaces belonging to the group comprising:
- glazed roofs;
- windscreens;
- rear windows;
- side windows;
- opening roofs;
- luggage boots.

17. Motor vehicle comprising at least one shading device according to any of claims 1 to 16, comprising at least one shading element which is guided along two non-parallel rails, between a retracted position and at least one shading position, and comprising at least one crosspiece (14) of variable length whose ends run within said rails (12₁ and 12₂), making it possible to displace said shading element along said rails,
**characterised in that** said crosspiece (14) carries locking means acting on two parts of said crosspiece which are movable along the axis of said crosspiece, said locking means being designed to take at least two positions:
- a locking position which firmly attaches said movable parts of the crosspiece in such a way as to fix the length of the latter and stop said crosspiece within said rails;
- at least one releasing position, in which said movable parts are disengaged in such a way as to permit a variation in the length of said crosspiece and a displacement of the latter within said rails;
and **in that** said crosspiece carries a control handle which cooperates with said locking means, whose default position corresponds to said locking position.

## Patentansprüche

1. Verdunkelungsvorrichtung für Kraftfahrzeug, die mindestens ein Verdunkelungselement aufweist, das entlang von zwei Schienen (12₁, und 12₂), die nicht parallel sind, zwischen einer eingezogenen Position und mindestens einer Verdunkelungsposition geführt ist,
die mindestens einen Querbalken (14) mit variabler Länge aufweist, dessen Enden in den Schienen (12₁ und 12₂) zirkulieren und das Bewegen des Verdunkelungselements entlang der Schienen erlauben,
**dadurch gekennzeichnet, dass** der Querbalken (14) Blockierungsmittel trägt, die auf zwei Teile des Querbalkens, die zueinander entlang der Achse des Querbalkens beweglich sind, einwirken, wobei die Blockiermittel mindestens zwei Positionen einnehmen können:
- eine Blockierposition, die die beweglichen Teile des Querbalkens fest miteinander verbindet, so dass die Länge dieses Letzteren fixiert ist und der Querbalken in den Schienen stillgestellt ist;
- mindestens eine Freigabeposition, in der die beweglichen Teile getrennt sind, so dass eine Längenvariation des Querbalkens und ein Bewegen dieses Letzteren in den Schienen erlaubt ist,
und dass der Querbalken einen Bediengriff trägt, der mit den Blockiermitteln, deren Standardposition der Blockierposition entspricht, zusammenarbeiten kann.

2. Verdunkelungsvorrichtung nach Anspruch 1, **dadurch gekennzeichnet, dass** der Querbalken (14) aus einem zentralen Teil (31) und zwei Endteilen (32) besteht, die jeweils ein Ende tragen, das in einer der Schienen (12₁ und 12₂) zirkuliert, und die in Bezug auf den zentralen Teil (31) gleitend montiert sind, und dass die Blockiermittel auf die Endteile (32) einwirken.

3. Verdunkelungsvorrichtung nach einem der Ansprüche 1 und 2, **dadurch gekennzeichnet, dass** der Bediengriff (61) mit Rückholmitteln, die danach streben, die Blockiermittel in die Blockierposition zurückzuführen, zusammenwirkt.

4. Verdunkelungsvorrichtung nach einem der Ansprüche 1 bis 3, **dadurch gekennzeichnet, dass** der Griff (61) in zwei Richtungen, die es erlauben, zwei Freigabepositionen festzulegen, beweglich ist.

5. Verdunkelungsvorrichtung nach Anspruch 4, **dadurch gekennzeichnet, dass** der Griff (61) in Drehung beweglich montiert ist und zwei Bedienfinger (611 und 612) antreibt, die jeweils in der einen oder der anderen der Freigabepositionen aktiv sind und auf eine in Drehung bewegliche Nocke (52) einwirken.

6. Verdunkelungsvorrichtung nach einem der Ansprüche 1 bis 5, **dadurch gekennzeichnet, dass** die Blockiermittel ein stationäres Element aufweisen, das mit dem Querbalken (14) fest verbunden ist, und mindestens ein bewegliches Element, das mit dem stationären Element in Berührung kommt.

7. Verdunkelungsvorrichtung nach Anspruch 6, **dadurch gekennzeichnet, dass** das stationäre Element eine Rolle (51) ist, und dass das bewegliche Element eine Nocke (53) ist, die dazu vorgesehen ist, sich in die Seilscheibe der Rolle (51) zu fügen.

8. Verdunkelungsvorrichtung nach Anspruch 7, **dadurch gekennzeichnet, dass** die Rolle (51) aus Elastomer besteht.

9. Verdunkelungsvorrichtung nach einem der Ansprüche 1 bis 8, **dadurch gekennzeichnet, dass** sie Ausgleichsmittel aufweist, die die Endteile (32) fest derart verbinden, dass sie sich im Wesentlichen symmetrisch zu dem zentralen Teil (31) bewegen.

10. Verdunkelungsvorrichtung nach Anspruch 9, **dadurch gekennzeichnet, dass** die Ausgleichsmittel Eingriffsmittel aufweisen, die zwei Zahnstangen (41 und 42) aufweisen, die jeweils auf jedem der Endteile (32) ausgebildet sind, die mit einem Zahnrad (43), das fest mit dem Verdunkelungselement verbunden ist, zusammenwirken, und
dass die Blockiermittel auf das Zahnrad (43) einwirken.

11. Verdunkelungsvorrichtung nach den Ansprüchen 7 und 9, **dadurch gekennzeichnet, dass** die Rolle (51) auf die Achse (52) des Zahnrads (43) montiert ist.

12. Verdunkelungsvorrichtung nach einem der Ansprüche 1 bis 1 1 , **dadurch gekennzeichnet, dass** das Verdunkelungselement eine Sonnenschutzscheibe (11) aufweist.

13. Verdunkelungsvorrichtung nach Anspruch 12, **dadurch gekennzeichnet, dass** die Sonnenschutzscheibe (11) mit mindestens einer beweglichen seitlichen Klappe (23 und 24), die eine Fläche verdunkelt, die sich zwischen den Schienen (12₁ und 12₂) und dem Rand des Sonnenschutzvorhangs (11) erstreckt, zusammenarbeitet.

14. Verdunkelungsvorrichtung nach einem der Ansprüche 1 bis 13, **dadurch gekennzeichnet, dass** die Schienen (12₁ und 12₂) in zwei Richtungen gewölbt sind.

15. Verdunkelungsvorrichtung nach Anspruch 14, **dadurch gekennzeichnet, dass** die Endteile (32) jeweils ein Kugelgelenk tragen, das den Wölbungen der Schienen (12₁ und 12₂) folgen kann.

16. Vorrichtung nach einem der Ansprüche 1 bis 15, **dadurch gekennzeichnet, dass** sie das Verdunkeln mindestens eines Abschnitts mindestens einer der Flächen sicherstellt, die zu der Gruppe gehören, die Folgendes aufweist:
- die verglasten Fahrzeughimmel;
- die Windschutzscheiben;
- die Heckscheiben;
- die Seitenscheiben;
- die Schiebedächer;
- die Gepäckräume.

17. Kraftfahrzeug, das mindestens eine Verdunkelungsvorrichtung nach einem der Ansprüche 1 bis 16 aufweist, die mindestens ein Verdunkelungselement aufweist, das entlang von zwei nicht parallelen Schienen zwischen einer eingezogenen Position und mindestens einer Verdunkelungsposition geführt ist, und mindestens einen Querbalken (14) mit variabler Länge aufweist, dessen Enden in den Schienen (12₁ und 12₂) zirkulieren, so dass das Bewegen des Verdunkelungselements entlang der Schienen erlaubt ist,
**dadurch gekennzeichnet, dass** der Querbalken (14) Blockiermittel trägt, die auf zwei Teile des Querbalkens, die entlang der Achse des Querbalkens beweglich sind, einwirken, wobei die Blockiermittel mindestens zwei Positionen einnehmen können:
- eine Blockierposition, die die beweglichen Teile des Querbalkens fest miteinander verbindet, so dass die Länge dieses Letzteren fixiert ist und der Querbalken in den Schienen stillgestellt ist;
- mindestens eine Freigabeposition, in der die beweglichen Teile getrennt sind, so dass eine Längenvariation des Querbalkens und ein Bewegen dieses Letzteren in den Schienen erlaubt ist,
und dass der Querbalken einen Bediengriff trägt, der mit den Blockiermitteln, deren Standardposition der Blockierposition entspricht, zusammenarbeiten kann.
